# EUROPÄISCHE PATENTANMELDUNG

(11) **EP 1 130 365 A2**
(43) Veröffentlichungstag der Anmeldung: **05.09.2001**
(21) Anmeldenummer: 00107510.0
(22) Anmeldetag: 07.04.2000
(51) Int. Cl.: G01F 1/66, G10K 11/00

(54) **Vorrichtung zur Anordnung eines Ultraschallsensors**

(30) Priorität: 01.03.2000 DE 20003770 U
(71) Anmelder: BKM BOLENDER-KUBITZ MASCHINENKONSTRUKTION GMBH, 58093 Hagen (DE)
(72) Erfinder: Bolender,Klaus, 58119 Hagen (DE)
(74) Vertreter: Köchling, Conrad-Joachim

(57) **Zusammenfassung**

Um eine Hilfsvorrichtung zur Anordnung eines Sensors, insbesondere eines Ultraschallsensors (1), an einem Rohr (2) zum Zwecke der Durchflusserfassung und/oder Partikelerkennung bezüglich das Rohr (2) durchströmender Fluide, insbesondere bei Hydraulikkreisläufen oder Schmierkreisläufen, zu schaffen, die den Einsatz von entsprechenden Sensoren zum Zwecke der Durchflusserfassung oder Partikelerkennung bei von Fluiden durchströmten Rohren ermöglicht, wird vorgeschlagen, dass die Vorrichtung aus einer an dem Rohr (2) befestigbaren Halterung (3) besteht, in der ein Stößel (4) radial zum Rohr (2) bewegbar geführt ist, dass der Stößel (4) eine an die Rohrwandung anlegbare und diese im Bereich der Anlage zu einem Bezugsmessbereich (5) verformbare Stirnfläche aufweist, und dass anstelle des Stößels (4) nach der Formung des Bezugsmessbereiches (5) der Sensor (1) in die Halterung (3) derart einsetzbar ist, dass seine Sensorfläche vollständig an dem Bezugsmessbereich anliegt.

## Beschreibung

Die Erfindung betrifft eine Hilfsvorrichtung zur Anordnung eines Sensors, insbesondere eines Ultraschallsensors, an einem Rohr zum Zwecke der Durchflußerfassung und/oder Partikelerkennung bezüglich das Rohr durchströmender Fluide, insbesondere bei Hydraulikkreisläufen oder Schmierkreisläufen.

Es besteht ein Bedarf dahingehend, an Rohrleitungen, die beispielsweise ein Fluid eines Hydraulikkreislaufes oder eines Schmierkreislaufes führen, Meßorgane zur Durchflußbestimmung oder auch zur Partikelerkennung von im Fluid mitgeführten Partikeln vorzusehen. Sensoren, die eine entsprechende Messung von außerhalb des Rohres, also ohne unmittelbar in das Innere des Rohres einzugreifen, ermöglichen, sind im Stand der Technik an sich bekannt. Hierzu sind beispielsweise Ultraschallsensoren geeignet. Der Einsatz solcher Sensoren scheitert bei der angegebenen Zweckbestimmung daran, daß keine reproduzierbaren Werte mit den Sensoren erfaßt werden können.

Ausgehend von dieser Problematik liegt der Erfindung die Aufgabe zugrunde, eine Hilfsvorrichtung zu schaffen, die den Einsatz von entsprechenden Sensoren zum Zwecke der Durchflußerfassung oder Partikelerkennung bei von Fluiden durchströmten Rohren ermöglicht, wobei aussagekräftige und reproduzierbare Meßwerte mittels der Sensoren erfaßt werden können.

Zur Lösung dieser Aufgabe schlägt die Erfindung, daß die Vorrichtung aus einer an dem Rohr befestigbaren Halterung besteht, in der ein Stößel radial zum Rohr bewegbar geführt ist, daß der Stößel eine an die Rohrwandung anlegbare und diese im Bereich der Anlage zu einem Bezugsmeßbereich verformbare Stirnfläche aufweist, und daß anstelle des Stößels nach der Formung des Bezugsmeßbereiches der Sensor in die Halterung derart einsetzbar ist, daß seine Sensorfläche vollständig an dem Bezugsmeßbereich anliegt.

Im Prinzip besteht die Vorrichtung aus einer Halterung, die in geeigneter Weise an einem entsprechenden Rohr, welches von Fluiden durchströmt wird, befestigt ist. In dieser Halterung ist als erste Hilfseinrichtung ein Stößel radial zum Rohr bewegbar geführt. Dieser Stößel weist an seiner Stirnseite, die an die Rohrwandungen anlegbar ist, eine Stirnfläche auf, die bei entsprechender Druckausübung auf den Stößel zu einer Verformung der Rohrwandung im Bereich des Stößelansatzes führt, so daß die Rohrwandung zu einem Bezugsmeßbereich umgeformt wird. Nach der entsprechenden Formung des Bezugsmeßbereiches mittels des Stößels kann der Stößel aus der Halterung entnommen werden und anstelle des Stößels kann ein entsprechender Ultraschallsensor in die Halterung eingesetzt und in dieser befestigt werden. Der Sensor weist eine entsprechende Sensorfläche auf, die komplementär zu der Fläche ausgebildet ist, die den Bezugsmeßbereich bildet, so daß eine exakte Anlage der Sensorfläche an der dazu komplementären Bezugsfläche erreicht wird. Hierdurch ist es möglich, mittels des Sensors, insbesondere des Ultraschallsensors, eindeutige Meßwerte zu erfassen, die unverfälscht Aufschluß über Strömungsgeschwindigkeiten oder im Fluid mitgeführte Partikel geben können.

Ein wesentlicher Aspekt ist dabei, daß die Halterung, die an dem Rohr befestigt ist, bezüglich ihrer Lage nicht verändert wird, nachdem mittels des Stößels der Bezugsmeßbereich geformt worden ist, damit sichergestellt ist, daß der entsprechend geformte Sensor mit seiner Sensorfläche exakt an den Bezugsmeßbereich angelegt werden kann.

Der Bezugsmeßbereich kann beispielsweise linienförmig oder auch punktförmig ausgebildet sein. Eine flächige Ausbildung des Bezugsmeßbereiches ist dabei bevorzugt.

Um die eindeutige Signalübermittlung mittels des Sensors noch zu verbessern, kann vorgesehen sein, daß zwischen der Sensorfläche und dem Bezugsmeßbereich ein Kontaktmittel, insbesondere eine Kontaktpaste, eingebracht ist.

Um insbesondere zu vermeiden, daß Kontaktpaste durch den Sensor aus der Halterung herausgedrückt wird, ist bevorzugt vorgesehen, daß zwischen der Mündung der Halterung, an der der Stößel austritt, und der Rohrwandung eine ringförmige Dichtung angeordnet ist, die vom Stößel, gegebenenfalls mit Spiel, durchgreifbar ist.

Bevorzugt ist zudem vorgesehen, daß an der Halterung ein Anschluß für ein Druckmittel auf der dem Rohr abgewandten Seite der Stößelführung ausgebildet ist.

Das Druckmittel kann beispielsweise ein mechanisches Druckmittel in Form eines Gewindebolzens sein. Der Gewindebolzen kann in eine entsprechende Gewindeausbildung in der Mündung der Halterung mittels einer von außen betätigbaren Handhabe eingeschraubt werden, um hierdurch den Stößel gegen die Rohrwandung zu pressen und eine Ausformung des Bezugsmeßbereiches durch den Stößel zu erreichen.

Besonders bevorzugt ist vorgesehen, daß die Stirnfläche des Stößels, mittels derer der Bezugsmeßbereich formbar ist, als ebene, tangential zum Rohr verlaufende Fläche ausgebildet ist.

Um einen sicheren Sitz der Halterung am Rohr zu gewährleisten, ist zudem vorgesehen, daß die Halterung im Anlagebereich an die Rohrwandung dessen Krümmung angepaßt geformt ist oder ein an die Krümmung angepaßtes Formteil zwischen Halterung und Rohrwandung eingebracht ist, welches eine vom Stößel durchgreifbare Lochung aufweist, die auch den Dichtring aufnimmt.

Unter Umständen kann auch vorgesehen sein, daß die Halterung aus einem Formteil besteht, das lösbar an dem Rohr befestigt ist.

Eine solche Halterung soll zwar während der Formung der Bezugsmeßstelle und während des Betriebs des Sensors unverändert an derselben Position verbleiben, jedoch ist je nach Anwendungszweck möglich, beispielsweise eine Rohrleitung mittels solcher Einrichtungen zu überwachen und nach einem bestimmten Überwachungszeitraum die Vorrichtung von der Rohrwandung zu entfernen, um an einer anderen Stelle eine analoge Formung und Messung durchführen zu können.

Vorzugsweise ist vorgesehen, daß die Halterung aus einer zweischaligen Schelle besteht.

Eine bevorzugte Hilfsvorrichtung nach dem Oberbegriff des Anspruches 1, insbesondere nach einem Ansprüche 1 bis 8 wird darin gesehen, daß die Vorrichtung aus zwei an einem Rohr mit Abstand voneinander befestigbaren Halterungen besteht, die jeweils einen durchgehenden radial gerichteten Aufnahmekanal aufweisen, daß in die Aufnahmekanäle jeweils ein Sensor eingesetzt ist, der mit seiner dem Rohr zugewandten Stirnfläche an einen komplementär dazu ausgebildeten Bezugsmeßbereich der Rohrwandung anliegt, und daß die Sensoren mit einem Meßaufnehmer gekoppelt sind, der die von den Sensoren erfaßten Meßwerte aufnimmt und abrufbar speichert oder anzeigt.

Schematisierte Ausführungsbeispiele der Erfindung sind in der Zeichnung dargestellt und im folgenden näher beschrieben.

Es zeigt:
- Figur 1: eine Hilfsvorrichtung in Montagesollage im Schnitt gesehen;
- Figur 2 u. 3: Varianten der Ansicht gemäß Figur 1;
- Figur 4: die Variante mit eingesetztem Sensor;
- Figur 5 u. 6: eine weitere Variante in Schnittansicht und in Seitenansicht gesehen;
- Figur 7 u. 8: eine weitere Variante in den Ansichten gemäß Figur 5 und 6.

In der Zeichnung ist eine Hilfsvorrichtung zur Anordnung eines Sensors, insbesondere Ultraschallsensors 1, an einem Rohr 2 gezeigt. Die Anordnung dient dazu, den Durchfluß eines Fluides durch das Rohr beispielsweise größenordnungsmäßig zu erfassen und/oder auch vom Fluid mitgenommene Partikel mengenmäßig zu bestimmen. Solche Hilfsvorrichtungen werden insbesondere bei Rohren 2 eingesetzt, die Bestandteil von Hydraulikkreisläufen oder Schmiermittelkreisläufen sind.

Die Vorrichtung besteht im wesentlichen aus einer an dem Rohr 2 befestigbaren Halterung 3, in der zunächst ein Stößel 4 radial zum Rohr 2 bewegbar geführt ist. Der Stößel 4 weist an seiner Stirnseite (in den Zeichnungsfiguren unten) eine an die Rohrwandung des Rohres 2 anlegbare und durch Kraftausübung auf den Stößel 4, diese im Bereich der Anlage zu einem Bezugsmeßbereich 5 verformbare Stirnfläche auf. Es wird auf diese Weise zunächst mittels des Stößels 4 der Bezugsmeßbereich in der Rohrwandung ausgeformt.

Anschließend wird der Stößel aus der Halterung 3 entnommen und anstelle dessen der Sensor 1 in die Halterung 3 derart eingesetzt, daß seine Sensorfläche stirnseitig vollständig an dem Bezugsmeßbereich anliegt, wobei beide Flächen von Sensor und Bezugsmeßbereich derart komplementär ausgebildet sind, daß eine exakte Anlage vollflächig erreicht wird.

Zwischen der Stirnfläche des Sensors 1 und dem Bezugsmeßbereich des Rohres 2 kann ein Kontaktmittel, beispielsweise Kontaktpaste, eingebracht sein.

Um einen Austritt des Kontaktmittels aus der Halterung 3 zu vermeiden, ist zwischen der Mündung der Halterung 3, an der der Stößel 4 austritt, und der Rohrwandung des Rohres 2 eine ringförmige Dichtung 6, beispielsweise in Form eines O-Rings angeordnet, die vom Stößel 4, beziehungsweise auch von dem Sensor 1 durchgriffen gegebenenfalls abgedichtet ist.

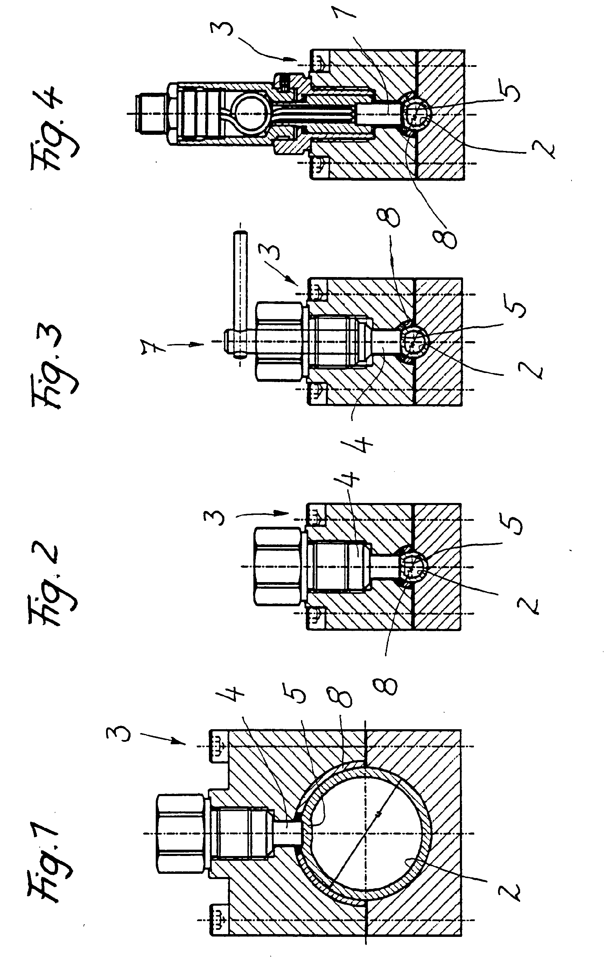

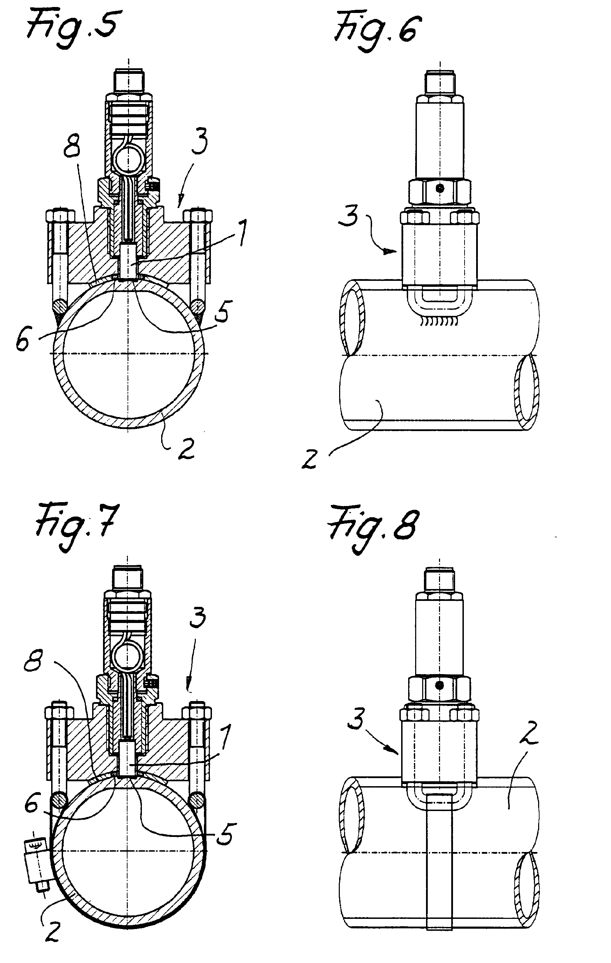

An der Halterung 3 ist ein Druckmittel 7, auf der dem Rohr 2 abgewandten Seite der Stößelführung ausgebildet, mittels derer der Stößel 4 radial zur Rohrwandung des Rohres 2 bewegt werden kann, um den Bezugsmeßbereich zu formen. Im Ausführungsbeispiel ist das Druckmittel 7 gemäß Figur 3 gezeigt, wobei an der Halterung 3 eine Gewindeausbildung vorgesehen ist, in die ein Gewindebolzen mittels einer Handhabe einschraubbar ist, mittels derer wiederum der Stößel 4 gegen die Wandung des Rohres 2 gepreßt wird, um den Bezugsmeßbereich zu formen.

Vorzugsweise ist die Stirnfläche des Stößels 4, mittels derer der Bezugsmeßbereich geformt wird, als ebene tangential zum Rohr 2 verlaufende Fläche ausgebildet.

Bei allen Ausführungsbeispielen ist die Halterung 3 im Anlagebereich an die Rohrwandung des Rohres 2, dessen Krümmung angepaßt geformt, wobei zwischen der Halterung 3 und der Wandung des Rohres 2 noch eine Formschale 8 eingelegt sein kann, die eine vom Stößel 4 beziehungsweise vom Sensor durchgreifbare Lochung aufweist, in die der Dichtring 6 eingelegt ist.

Bei der Ausführungsform nach Figur 1 bis 4 besteht die Halterung aus einer zweischaligen mittels Schrauben am Rohr 2 befestigbaren Schelle. Bei der Ausführungsform nach Figur 5 und 6 besteht die Halterung aus einer Schelle, die über Formbügel am Rohr 2 befestigbar ist, wobei die Formbügel am Rohr 2 außenseitig angeschweißt sind. Bei der Ausführungsform nach Figur 7 und 8 besteht die Halterung wieder aus einem Schellenteil, welches mittels eines Spannbandes am Rohr 2 fixiert ist.

Eine komplette Meßeinrichtung zur Durchflußbestimmung oder zur Partikelerkennung in Schmierkreisläufen oder Hydraulikkreisläufen besteht aus zwei in analoger Weise mit Abstand über den Rohrverlauf voneinander angebrachten Sensoren. Auf diese Weise kann durch Ultraschallmessung beispielsweise die Durchflußgeschwindigkeit eines Fluides oder auch die Menge an Partikeln innerhalb des Fluides erfaßt und durch geeignete Einrichtungen aufgezeichnet oder abgerufen werden. Der Sensor 1 ist dazu in geeigneter Weise mit entsprechenden Anschlüssen versehen, die wiederum an nachgeordnete Erfassungseinrichtungen oder Aufzeichnungseinrichtungen angeschlossen werden können.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Hilfsvorrichtung zur Anordnung eines Sensors, insbesondere eines Ultraschallsensors (1), an einem Rohr (2) zum Zwecke der Durchflußerfassung und/oder Partikelerkennung bezüglich das Rohr (2) durchströmender Fluide, insbesondere bei Hydraulikkreisläufen oder Schmierkreisläufen,
**dadurch gekennzeichnet, daß** die Vorrichtung aus einer an dem Rohr (2) befestigbaren Halterung (3) besteht, in der ein Stößel (4) radial zum Rohr (2) bewegbar geführt ist, daß der Stößel (4) eine an die Rohrwandung anlegbare und diese im Bereich der Anlage zu einem Bezugsmeßbereich (5) verformbare Stirnfläche aufweist, und daß anstelle des Stößels (4) nach der Formung des Bezugsmeßbereiches (5) der Sensor (1) in die Halterung (3) derart einsetzbar ist, daß seine Sensorfläche vollständig an dem Bezugsmeßbereich anliegt.

2. Hilfsvorrichtung nach Anspruch 1,
**dadurch gekennzeichnet, daß** zwischen der Sensorfläche und dem Bezugsmeßbereich (5) ein Kontaktmittel, insbesondere eine Kontaktpaste, eingebracht ist.

3. Hilfsvorrichtung nach Anspruch 1 oder 2,
**dadurch gekennzeichnet, daß** zwischen der Mündung der Halterung (3), an der der Stößel (4) austritt, und der Rohrwandung eine ringförmige Dichtung (6) angeordnet ist, die vom Stößel (4), gegebenenfalls mit Spiel, durchgreifbar ist.

4. Hilfsvorrichtung nach einem der Ansprüche 1 bis 3,
**dadurch gekennzeichnet, daß** an der Halterung (3) ein Anschluß für ein Druckmittel (7) auf der dem Rohr (2) abgewandten Seite der Stößelführung ausgebildet ist.

5. Hilfsvorrichtung nach einem der Ansprüche 1 bis 4,
**dadurch gekennzeichnet, daß** die Stirnfläche des Stößels (4), mittels derer der Bezugsmeßbereich (5) formbar ist, als ebene, tangential zum Rohr (2) verlaufende Fläche ausgebildet ist.

6. Hilfsvorrichtung nach einem der Ansprüche 1 bis 5,
**dadurch gekennzeichnet, daß** die Halterung (3) im Anlagebereich an die Rohrwandung, dessen Krümmung angepaßt geformt ist oder ein an die Krümmung angepaßtes Formteil (8) zwischen Halterung (3) und Rohrwandung eingebracht ist, welches eine vom Stößel (4) durchgreifbare Lochung aufweist, die auch den Dichtring (6) aufnimmt.

7. Hilfsvorrichtung nach einem der Ansprüche 1 bis 6,
**dadurch gekennzeichnet, daß** die Halterung (3) aus einem Formteil besteht, das lösbar an dem Rohr befestigt ist.

8. Hilfsvorrichtung nach einem der Ansprüche 1 bis 7,
**dadurch gekennzeichnet, daß** die Halterung (3) aus einer zweischaligen Schelle besteht.

9. Hilfsvorrichtung nach dem Oberbegriff des Anspruches 1, insbesondere nach einem der Ansprüche 1 bis 8,
**dadurch gekennzeichnet, daß** die Vorrichtung aus zwei an einem Rohr (2) mit Abstand voneinander befestigbaren Halterungen (3) besteht, die jeweils einen durchgehenden radial gerichteten Aufnahmekanal aufweisen, daß in die Aufnahmekanäle jeweils ein Sensor (1) eingesetzt ist, der mit seiner dem Rohr (2) zugewandten Stirnfläche an einen komplementär dazu ausgebildeten Bezugsmeßbereich der Rohrwandung anliegt, und daß die Sensoren (1) mit einem Meßaufnehmer gekoppelt sind, der die von den Sensoren (1) erfaßten Meßwerte aufnimmt und abrufbar speichert oder anzeigt.
